# EUROPEAN PATENT SPECIFICATION

(11) **EP 2 100 715 B1**
(45) Date of publication and mention of the grant of the patent: **15.01.2014**
(21) Application number: 08004524.8
(22) Date of filing: 12.03.2008
(51) Int. Cl.: B29C 45/14, B29C 45/16, E05D 15/06, F16C 13/00

(54) **Method for the production of a bearing carrier**
Verfahren zur Herstellung eines Lagerungsträgers
Procédé de production d'un boîtier de roulement

(43) Date of publication of application: 16.09.2009
(73) Proprietor: Aktiebolaget SKF, 415 50 Göteborg (SE)
(72) Inventor: Pastorino, Matteo, 15011 Acqui Terme (AL) (IT); Restivo, Riccardo, 10144 Torino (IT); Scaltriti, Gianpiero, 10135 Torino (IT); Sansone, Alessandro, 10064 Pinerolo (TO) (IT)
(74) Representative: Tedeschini, Luca

(56) References cited:
- WO-A-99/04123
- BE-A- 473 065
- GB-A- 326 802
- GB-A- 1 110 288
- JP-A- 5 228 959
- US-A- 1 351 062
- US-A- 3 193 870
- US-A- 4 109 343
- US-A- 4 642 844
- US-A- 4 994 222
- US-A1- 2001 036 888
- US-A1- 2006 021 192

## Description

The present invention refers to a method for the production of a bearing carrier.

It should be pointed out that the present invention will make specific reference - without, however, losing any generality in any way - to a method for the production of a bearing carrier which is suitable for being arranged in sliding doors.

In general, carriers for sliding doors are made up of a main support body of a substantially flattened shape which is provided with two cylindrical through housings which are co-axial to respective axes which are parallel to each other, with a connecting element for a pin originating from the sliding door, and with two pairs of wheels mounted at opposite ends of respective rods, which are each inserted inside a relative through housing.

US-A-4 642 844 describes, for example, a carrier of the type which has been described above and in which, in particular, the support rods of each pair of wheels are inserted inside the through housings with the additional eventual interposition of a number of rolling bearings in order to reduce friction, and in which the wheels are assembled to the same rods by means of the use of pressure pins which are inserted at the ends of the rods. In addition, in the carrier which is described in US-A-4 642 844, the connecting element is defined by an additional through housing through the main body and arranged between the two housings of the rods in a direction which is transverse to the two housings themselves. The pin, once it has been inserted into its own housing, is provided with, at its end which is arranged outside the housing, a head which has a diameter which is greater than the diameter of the housing itself in order to impede any unthreading.

In order, however, to produce a carrier of the kind which has been described above, it is necessary to use a procedure which comprises the effective production of the main support body with the two housings for the rods and with the housing for the pin of the door, the introduction of the rods into each housing, the fixing of the wheels at the ends of the rods and, during the installation phase, the additional fixing of the head at the end of the pin, as well as, in the case that a carrier with a higher level of performance is required, the insertion of rolling bearings inside the housings for the rods.

In addition, in the specific case of the above-mentioned American patent, the production of the main body consist of cutting a steel plate in order to produce a plate which is provided with four holes and a shaped semi-cylindrical portion, and the subsequent folding of the plate into a U-shape in such a way as to make the holes coincide two by two in order to define the housings for the rods and in such a way that each shaped portion faces the other shaped portion in order to define the housing for the pin.

It is thus obvious that the operations for producing a bearing carrier in accordance with the method which has been described above are not only laborious and require a high number of steps and components, but do not even conclude with the production of the carrier since further additional interventions are also required during the installation phase.

The aim of the present invention is to provide a method for the production of a bearing carrier, which will permit a reduction in the number of steps pertaining to the production of the carrier itself, as well as, in addition, a reduction in the number of the construction elements pertaining to the carrier, and, finally, a more rapid and more efficient procedure in terms of installing the carrier without, however, increasing production costs while producing a carrier which will guarantee a high level of performance in terms of weight as well as in terms of reducing friction.

GB-A-1 110 288 discloses a bearing carrier of the type mentioned in the preamble of claim 1. Another bearing carrier is known from US 2006/021192 A1.

According to the present invention, there is provided a method for the production of a bearing carrier as defined in claim 1.

The present invention will now be described with reference to the attached drawings, which illustrate a non-limiting embodiment of the present invention, in which:
FIGURE 1 illustrates, in perspective view, a preferred embodiment of a bearing carrier which is produced according to the present invention;
FIGURE 2 shows, in lateral elevation and on a reduced scale, the carrier which is shown in FIGURE 1;
FIGURE 3 shows a transverse section of the carrier which is illustrated in FIGURE 2;
FIGURE 4 is a section along the line IV-IV which is shown in FIGURE 2;
FIGURE 5 is a section along the line V-V which is shown in FIGURE 2;
FIGURE 6 illustrates, in a perspective exploded view, the bearing carrier which is shown in the preceding drawing and an injection mould for the production of a preferred embodiment of the method according to the present invention;
FIGURE 7 is a transverse section of the bearing carrier and the injection mould;
FIGURE 8 is a section along the line VIII-VIII which is shown in FIGURE 7;
FIGURE 9 is a section along the line IX-IX which is shown in FIGURE 7;
FIGURE 10 is a section along the line X-X which is shown in FIGURE 7.

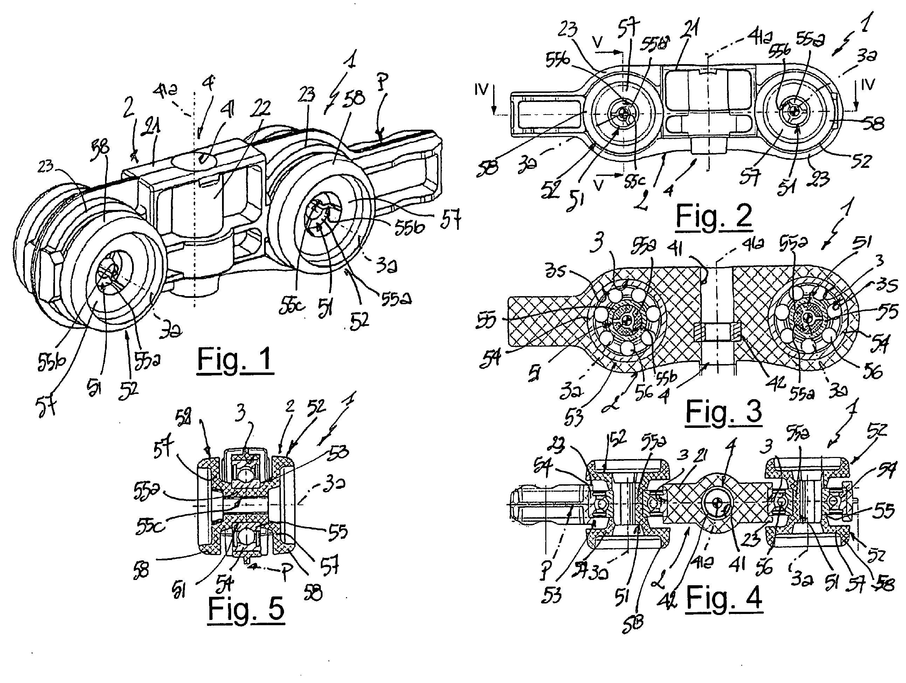

With reference to FIGURES 1 - 5, the number 1 indicates in its entirety a bearing carrier suitable to be used to bear sliding doors (of a well-known kind and which are not illustrated).

The carrier 1 comprises a main body 2 which is of a substantially flattened shape, and two cylindrical housings 3, which are obtained through the main body 2 transverse to an intermediate plane P of the body 2 itself, and which are co-axial to respective axes 3a which are parallel to each other. In addition, the carrier 1 comprises a further cylindrical housing 41, which is obtained through the main body 2 at an equal distance from both the housings 3, and which is co-axial to a respective axis 41a which is transverse to the axes 3a and contained in the plane P.

In addition, the carrier 1 comprises an internally threaded body 42, such as, for example, a threaded metallic insert, or a nut, which is embedded by co-moulding inside the main body 2, and which is arranged co-axial to the axis 41a along the housing 41, with which it defines a connecting element 4 for an external pin (which is not illustrated) originating from the sliding door.

Finally, the carrier 1 comprises a rod 51 for each housing 3 which is rotatably arranged inside each cylindrical housing 3; a pair of wheels 52 which are arranged at the opposite ends of each rod 51, and, for each rod 51, a rolling bearing 53 which is suitable for supporting in rotatable fashion the relative rod 51 inside the relative housing 3.

Each bearing 53 is co-moulded together with the body 2 and presents an outer race 54 which is arranged in contact with an inner surface 3s of the relative housing 3, an inner race 55 which is arranged inside the outer race 54 and which is co-axial to the relative axis 3a, and a number of rolling bodies 54 which are interposed between the two race 54 and 55.

Each rod 51 is arranged inside an inner race 55, and presents three cylindrical sectors 55a, which are separated from each other by the same number of radial slits 55b which are parallel to the relative axis 3a, and which define between them a through hole 55c which is co-axial to the axis 3a itself and which is connected to the radial slits 55b.

Each wheel 52 of each pair of wheels 52 is produced by co-moulding with the relative rod 51 and forms, thus, a single body of plastic material with the rod 51 itself, or rather with the relative three cylindrical sectors 55a. In particular, each wheel 52 presents a central disk 57 which is transverse to the relative axis 3a and which is arranged laterally to the body 2, and a shaped ring 58 which is integral with the disk 57, and which is made of a single piece together with the relative disk 57 and with the relative three cylindrical sectors 55a of the relative rod 51.

The body 2 presents a symmetrical structure in relation to the plane P, and is produced by injection co-moulding of plastic material, which, according to necessity, may be similar to or different from the plastic material of the rods 51 of/and the relative pairs of wheels 52. The body 2 comprises, in a central position and at an intermediate point between the pairs of wheels 52, a reinforcement ribbing 21 of a rectangular shape which is produced around a cylinder 22 which is co-axial to the axis 41a and incorporates the housing 41 and the nut 42. In addition, the body 2 also comprises two annular reinforcement ribbings 23, which are obtained around the outer races 54 in order to axially block the races 54 themselves and present, in the embodiment which is shown in the Figures, a respective outer diameter of dimensions which are substantially similar to the dimensions of the outer diameters of the wheels 52.

The FIGURES from 6 to 10 show a mould 100 for the provision of a production method for the carrier 1 which has been described above.

The mould 100 comprises two shells 101 presenting specular shapes in relation to each other and to an intermediate plane P', which coincides with the plane P of the body 2 once the mould 100 is closed. Each shell 101 comprises a base wall 101a which is parallel to the plane P' itself, two greater walls 101b which are transverse to the plane P', two narrower walls 101c which are transverse to the plane P' and to the walls 101b, and an inner indent 102 which is shaped in such a way as to reproduce the external outline of the body 2.

In addition, the mould 100 comprises two groups of pins or blades 103 which are mobile parallel to respective axes 103a which are parallel to a respective 3a and through respective holes 103b, which are obtained through the walls 101a in order to permit the introduction of the pins or blades 103 into the mould 100 and are uniformly distributed around each relative axis 3a. Each group of pins or blades 103 presents three pins or blades 103 which are distributed around a relative axis 103a in such a way as to define a support surface 103c, which passes via three outer directrixes of the pins or blades 103 themselves, and presents an outer dimension which is substantially similar to an inner dimension of the relative inner race 55.

In addition, the mould 100 comprises two cylindrical inserts 141 which are mobile towards and away from each other along an axis 141a which is contained in the plane P' and corresponds to the axis 41a, and, for each axis 103a, four flattened inserts 153 which are mobile parallel to the plane P' by means of respective notches 153a which are obtained in the walls 101b of the shells 101.

The four inserts 153 of each axis 103a are arranged two by two facing each other and each pair of facing inserts 153 and are arranged opposite the relative axis 103a in relation to the other relative pair of facing inserts 153, while the inserts 153 of each pair of facing inserts 153 are arranged at a distance from one another and along the relative axis 103a substantially equal to a thickness of a bearing 53.

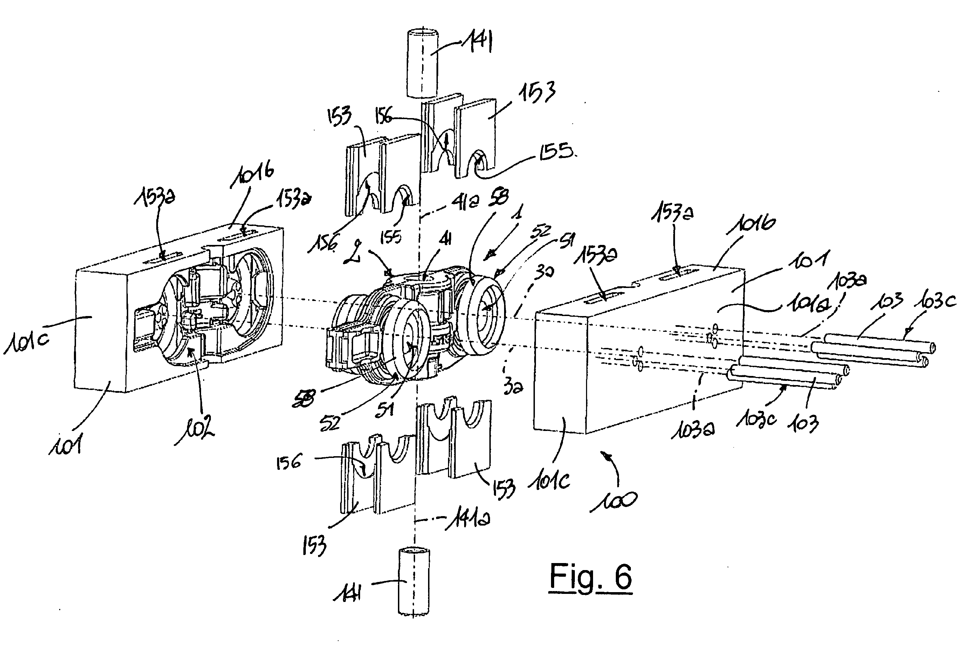

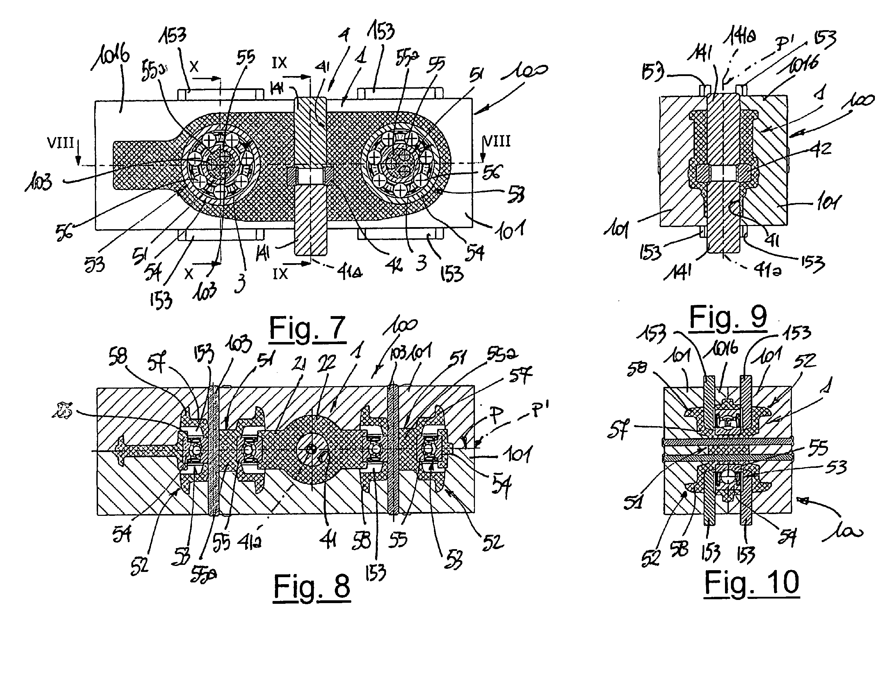

Each insert 153 presents, at the end which is inserted inside the mould 100, a respective arch 155 which is hollowed out in a semi-cylindrical shape which is suitable for producing, with the arch 155 of the insert 153 which is arranged opposite the relative axis 103a and once that both the inserts 153 are arranged inside the mould 100, a central disk 57 of the relative wheel 52. In addition, each insert 153 presents a semi-annular indent 156 which is obtained around the relative arch 155 and from the part facing the insert 153 of the relative pair of inserts 153 which are facing each other. In the embodiment depicted in FIGURES 6-10, cylindrical pins 103 are used which produce, for each rod 51, three cylindrical sectors 55a which are centrally connected to each other instead of being separated by relative radial slits 55b which, instead, are obtained with the equivalent use of blades instead of pins.

The production of a carrier 1 takes place inside the mould 100 by producing by means of co-moulding the main body 2 with the housings 3 and, still by means of co-moulding, the two pairs of wheels 52 with the relative rods 51.

The mould 100 is initially kept open with the shells 101 facing each other at a determined distance from each other, and with the inserts 153 inserted into the shells 101 by means of the relative notches 153a.

Before closing the shells 101 by bringing them nearer to each other, inside the mould 100 are also inserted all the pins 103 through the wall 101b of one of the two shells 101 and on the surface 103c which is thus formed by each group of pins 103 is mounted a relative bearing 53 substantially abutting the relative pair of inserts 153 in correspondence to the indents 156.

At this point, the nut 42 is positioned on one of the two cylindrical inserts 141, which are brought nearer to each other along the axis 141a until the point of blocking the nut 42 itself in a determined position along the axis 141a or rather along the axis 41a. Thus the shells 101 of the mould 100 are also brought nearer to each other and are closed one against the other determining the blocking and the precise positioning of the bearings 53 due to the effect of the double axial check which is exerted on each of these by each pair of inserts 153 of the relative axis 103a and due to the presence of the three pins 103 inside each inner race 55.

The closure of the mould 100 determines the creation inside the same mould 100 of three cavities V1, V2, and V3 which are isolated from each other by the inserts 153, which, among other things, are shaped in such a way as to also close and seal the annular space which is comprised between the races 54 and 55 of each bearing 53.

The cavity V1 corresponds, in substance, to the volume of the body 2, while the cavities V2 and V3 each correspond to a respective pair of wheels 52 with the relative rods 51.

The injection of plastic material into these cavities will determine the production of the elements of the carrier 1 in rapid fashion and with a decidedly reduced number of pieces in relation to the well-known method. Above all, taking into consideration the extreme precision with which it is possible to produce the shells 101 and the various inserts 141 and 153, it is thus possible to produce carriers 1 of very precise dimensions while maintaining production at a cost-effective level.

Once injection and cooling have been completed, the inserts 141 and 153 are first extracted from the mould 100, thus permitting the opening of the shells 101 and the extraction of the carrier 1 which is still being supported by the pins 103.

In use, the carrier 1 is fixed by means of the connecting element 4 to an external threaded pin originating from a sliding door and is inserted inside a track in order to guide the sliding door in co-operation with other carriers 1. The presence of a threaded nut 42 is not strictly necessary since a bushing which may be engaged by a pin of the wheel might be sufficient, but, on the other hand, it makes the operation of installing the carrier 1 extremely speedy and removes the need for the aid of any additional fixing elements.

It is intended that the present invention should not be limited to the embodiments which are herein described and illustrated, which are to be considered as exemplary embodiments of the method for the production of a bearing carrier, which may instead be subject to further modifications as defined in the appended claims.

## Claims

1. Method for the production of a bearing carrier (1) comprising a main body (2) provided with two cylindrical through housings (3) which are co-axial to respective parallel axes and a connecting element (4) for an external pin, two pairs of wheels (52) arranged at the opposite ends of respective rods (51) which are each inserted rotatably inside a respective one of the cylindrical through housings (3), two rolling bearings (53) each rotatably supporting a respective one of the rods (51) inside the relative housing (3);
the method being **characterised by** the steps of:
a) providing an injection mould (100) with three separate injection cavities (V1, V2, V3) isolated from each other, wherein a first cavity (V1) corresponds to the shape of the main body (2), the second and third cavities (V2, V3) each correspond to the shape of a respective pair of wheels (52) with a relevant rod (51);
b) inserting a rolling bearing (53) for each pair of wheels (52) into the second and third cavities (V2, V3) of the injection mould (100);
c) injecting plastic material, in a single co-moulding injection phase, into the three injection cavities (V1, V2, V3), thereby forming the two pairs of wheels (52) and the respective rods together with the main body, each wheel of each pair of wheels is co-moulded with the respective rods and forms a single body with the rod itself, the rod being rotatably supported by the bearing (53) in the cylindrical housing (3).

2. Method according to Claim 1, **characterised in that** the step b) comprises the step of blocking each rolling bearing (53) inside the injection mould (100) by inserting blocking means (103, 153) along each of the said axes and transversely to the said axes.

3. Method according to Claim 2, **characterised in that** the insertion of the blocking means (103, 153) inside the said injection mould (100) results in the three injection cavities (V1, V2, V3).

4. Method according to any one of the preceding Claims, **characterised in that** the injecting step c) is preceded by the step of inserting inside the injection mould (100) positioning means (141) for positioning inside the mould (100) an internally threaded body (42) defining part of the connecting element (4).

5. Method according to Claim 4, **characterised in that** the positioning means (141) comprise two cylindrical pins (141) which are mobile towards and away from each other along a connecting axis (141a) which is transverse to the said axes and defines, during the step c), a through housing (41) for the said external pin.

## Patentansprüche

1. Verfahren zur Herstellung eines Lagerträgers (1), umfassend einen Hauptkörper (2), der mit zwei zylinderförmigen Durchgangsgehäusen (3), die koaxial in Bezug auf parallele Achsen angeordnet sind, und ein Verbindungselement (4) für einen externen Stift, wobei zwei Paar Räder (52) an den gegenüberliegenden Enden der entsprechenden Stangen (51) angeordnet sind, die jeweils drehbar in einem der entsprechenden zylinderförmigen Durchgangsgehäuse (3) eingeführt sind, wobei zwei Wälzlager (53) jeweils drehbar eine der entsprechenden Stangen (51) innerhalb des entsprechenden Gehäuses (3) tragen;
wobei das Verfahren durch die folgenden Schritte gekennzeichnet ist:
a) Bereitstellen einer Spritzgussform (100) mit drei separaten, voneinander isolierten Einspritzhohlräumen (V1, V2, V3), wobei ein erster Hohlraum (V1) der Form des Hauptkörpers (2) entspricht, der zweite und der dritte Hohlraum (V2, V3) jeweils der Form eines entsprechenden Radpaars (52) mit einer zugehörigen Stange (51) entsprechen;
b) Einführen eines Wälzlagers (53) für jedes Radpaar (52) in den zweiten und dritten Hohlraum (V2, V3) der Spritzgussform (100);
c) Einspritzen von Kunststoffmaterial in einer einzelnen Co-Einspritzgussphase in die drei Einspritzhohlräume (V1, V2, V3) und dadurch Formen der zwei Paar Räder (52) und der zugehörigen Stangen zusammen mit dem Hauptkörper, wobei jedes Rad jedes Radpaares mit den entsprechenden Stangen zusammen gegossen wird und einen einzigen Körper mit der Stange selbst bildet, wobei die Stange drehbar von dem Lager (53) in dem zylinderförmigen Gehäuse (3) gehalten wird.

2. Verfahren nach Anspruch 1, **dadurch gekennzeichnet, dass** Schritt b) den Schritt des Blockierens jedes Wälzlagers (53) innerhalb der Spritzgussform (100) durch Einführen von Blockiermitteln (103, 153) entlang jeder der Achsen und quer zu den Achsen beinhaltet.

3. Verfahren nach Anspruch 2, **dadurch gekennzeichnet, dass** die Einführung der Blockiermittel (103, 153) in die Spritzgussform (100) zu den drei Einspritzhohlräumen (V1, V2, V3) führt.

4. Verfahren nach einem der vorherigen Ansprüche, **dadurch gekennzeichnet, dass** dem Einspritzschritt c) der Schritt des Einführens von Positionierungsmitteln (141) in die Spritzgussform (100) zur Positionierung eines Körpers mit Innengewinde (42) innerhalb der Gussform (100) vorangeht, der einen Teil des Verbindungselements (4) definiert.

5. Verfahren nach Anspruch 4, **dadurch gekennzeichnet, dass** die Positionierungsmittel (141) zwei Zylinderstifte (141) umfassen, die zueinander und voneinander weg entlang einer Verbindungsachse (141a) beweglich sind, die quer zu den Achsen verläuft und während Schritt c) ein Durchgangsgehäuse (41) für den externen Stift definiert.

## Revendications

1. Procédé de production d'un support de palier (1) comprenant un corps principal (2) pourvu de deux boîtiers traversants cylindriques (3) qui sont coaxiaux par rapport à des axes parallèles respectifs et un élément de connexion (4) pour une goupille externe, deux paires de roues (52) disposées aux extrémités opposées de tiges respectives (51) qui sont chacune insérées de manière rotative à l'intérieur d'un boîtier respectif des boîtiers traversants cylindriques (3), deux paliers à roulement (53) supportant chacun à rotation une tige respective des tiges (51) à l'intérieur du boîtier respectif (3) ;
le procédé étant **caractérisé par** les étapes suivantes :
a) fournir un moule d'injection (100) avec trois cavités d'injection séparées (V1, V2, V3) isolées les unes des autres, une première cavité (V1) correspondant à la forme du corps principal (2), les deuxième et troisième cavités (V2, V3) correspondant chacune à la forme d'une paire de roues respective (52) avec une tige associée (51) ;
b) insérer un palier à roulement (53) pour chaque paire de roues (52) dans les deuxième et troisième cavités (V2, V3) du moule d'injection (100) ;
c) injecter un matériau plastique, dans une phase d'injection par co-moulage unique, dans les trois cavités d'injection (V1, V2, V3), pour ainsi former les deux paires de roues (52) et les tiges respectives conjointement avec le corps principal, chaque roue de chaque paire de roues étant co-moulée avec les tiges respectives et formant un corps unique avec la tige elle-même, la tige étant supportée à rotation par le palier (53) dans le boîtier cylindrique (3).

2. Procédé selon la revendication 1, **caractérisé en ce que** l'étape b) comprend l'étape consistant à bloquer chaque palier à roulement (53) à l'intérieur du moule d'injection (100) en insérant un moyen de blocage (103, 153) le long de chacun desdits axes et transversalement auxdits axes.

3. Procédé selon la revendication 2, **caractérisé en ce que** l'insertion du moyen de blocage (103, 153) à l'intérieur dudit moule d'injection (100) produit les trois cavités d'injection (V1, V2, V3).

4. Procédé selon l'une quelconque des revendications précédentes, **caractérisé en ce que** l'étape d'injection c) est précédée par l'étape d'insertion à l'intérieur du moule d'injection (100) de moyens de positionnement (141) pour positionner à l'intérieur du moule (100) un corps (42) à filetage interne définissant une partie de l'élément de connexion (4).

5. Procédé selon la revendication 4, **caractérisé en ce que** les moyens de positionnement (141) comprennent deux goupilles cylindriques (141) qui sont déplaçables l'une vers l'autre et à l'écart l'une de l'autre le long d'un axe de connexion (141a) qui est transversal auxdits axes et qui définit, au cours de l'étape c), un boîtier traversant (41) pour ladite goupille externe.
